# EUROPÄISCHE PATENTSCHRIFT

(11) **EP 2 375 090 B1**
(45) Veröffentlichungstag und Bekanntmachung des Hinweises auf die Patenterteilung: **08.05.2013**
(21) Anmeldenummer: 11001878.5
(22) Anmeldetag: 07.03.2011
(51) Int. Cl.: F16C 25/06

(54) **Verfahren und Vorrichtung zur Montage vorgespannter Wälzlager**
Method and device for mounting pre-tensioned roller bearings
Procédé et dispositif de montage de paliers à roulement prétendus

(30) Priorität: 08.04.2010 DE 102010014217
(43) Veröffentlichungstag der Anmeldung: 12.10.2011
(73) Patentinhaber: Capital Technology Beteiligungs GmbH, 8600 Bruck an der Mur (AT)
(72) Erfinder: Seidel, Stefan, 8010 Graz (AT); Brandl, Christoph, 8101 Gratkorn (AT)
(74) Vertreter: Kovac, Werner

(56) Entgegenhaltungen:
- US-A- 5 125 156
- US-A1- 2002 124 407
- US-A1- 2005 005 451

## Beschreibung

Die Erfindung betrifft ein Verfahren zur Montage gegeneinander vorgespannter Wälzlager mit positivem Druckwinkel, deren Außenringe in einem Tragteil und deren Innenringe auf einer Welle sitzen, wobei der Innenring des ersten Wälzlagers an einem Bund der Welle abgestützt ist und am Innenring des zweiten Wälzlagers eine auf der Welle verschraubbare Mutter angreift. Die Erfindung betrifft auch eine Vorrichtung zur Ausübung des Verfahrens.

Insbesondere ist an eine Radlagerung eines Hochleistungsfahrzeuges gedacht, wie sie im Motorsport eingesetzt wird. Radlagerungen mit breiter Abstützbasis werden verwendet, um eine hohe Vorspur- und Sturzsteifigkeit zu erzielen. Die breite Abstützbasis wird durch in Achsrichtung weit voneinander entfernte Schrägkugellager oder auch Kegelrollenlager in O - Anordnung erreicht. Das ist im Anspruch als positiver Druckwinkel gekennzeichnet. Auch ein möglichst großer Teilkreis der Wälzlager ist vorteilhaft.

Um bei maximaler Präzision einen minimalen Verschleiß zu erreichen, müssen die Lager in definiertem Ausmaß gegeneinander vorgespannt sein. Weil die Erfindung vorwiegend, aber nicht ausschließlich, für die Anwendung in Fahrzeugen gedacht ist, wird in der Beschreibung die Welle auch als Nabe und der Tragteil als Radträger bezeichnet.

### Stand der Technik

Die definierte Vorspannung muss beim Anziehen der Mutter möglichst genau eingehalten werden. Dazu werden in der Praxis zwei Methoden angewandt. Die einfachere ist das Anziehen der Mutter mit einem bestimmten Drehmoment. Diese ist außerordentlich nachteilig, weil notorisch ungenau. Das Anzugsmoment für eine bestimmte Vorspannung hängt nämlich von einer Reihe toleranzbehafteter Einflüsse ab und streut daher in einem sehr weiten Bereich. Diese Einflüsse sind:
■ Reibungskoeffizient an der Anlagefläche Mutter/Lagerinnenring,
■ Reibungskoeffizient am inneren Lagersitz des mutterseitigen Wälzlagers,
■ Rauhigkeit am inneren Lagersitz des mutterseitigen Wälzlagers,
■ Toleranzbchaftete Pressung an allen inneren und äußeren Lagersitzen,
■ Toleranzbehaftetes Übermaß des Distanzringes oder dem Schulterabstand am Tragteil,
■ Toleranzbehafteter Axialversatz von Innen- und Außenring der Lager,
■ Toleranzbehaftete Wandstärken (Steifigkeiten) der Teile,
■ Toleranzbedingte Maßabweichungen der Lagerringe.

Zwar wird die Vorspannung nach der Montage durch Messung des Rollmomentes vor und nach dem Anziehen der Mutter und Bildung einer Rollmomentdifferenz geprüft. Das Rollmoment ist der Rollwiderstand einer Lagerung gemessen als Drehmoment. Das Rollmoment wird durch die Reibung der Dichtlippen und den Widerstand des Schmiermittels verfälscht, weshalb die Rollmomentdifferenz maßgebend ist. Ihr optimaler Wert wurde vorher experimentell ermittelt. Abgesehen davon, dass die Rollmomente auch drehzahlabhängig sind, erhöht die Prüfung den Arbeitsaufwand erheblich, ohne dass das Resultat zufrieden stellend wäre. Wenn der Prüfling nämlich nicht besteht, was wegen der genannten Einflüsse die Regel ist, muss der Vorspannvorgang iterativ wiederholt werden, was zeitraubend und nicht beliebig oft möglich ist.

Ein höher entwickeltes Verfahren zum Einstellen einer definierten Vorspannung besteht gemäß dem Patent EP 1 167 794 B1 der Anmelderin darin, die Vorspannung anhand der Dehnung des die Innenringe der Lager tragenden Teiles, der Welle oder Nabe, einzustellen. Dabei wird mittels eines das auf die Mutter ausgeübte Drehmoment messenden Schlüssels die Mutter angezogen. Die Messung des Anzugsmomentes an der Mutter erlaubt es, den eigentlichen Spannvorgang der Wälzlager von dem vorhergehenden in Anschlag schrauben der Mutter zu unterscheiden und so den Anfangswert der begleitenden Dehnungsmessung abzulesen.

Unter der Voraussetzung dass die Nabe ausreichend dehnbar ist, ist diese Methode etwas besser, weil der Zusammenhang zwischen Dehnung und von der Mutter ausgeübter Längskraft bei bekannter Geometrie und bekanntem Werkstoff ausreichend genauer bestimmbar ist und weil die Reibungskoeffizienten an der Mutter keinen Einfluss mehr haben. Sie ist aber noch immer unbefriedigend, weil von den oben aufgezählten acht streuenden Einflüssen noch sieben wirksam bleiben. Auch hier kann das Rollmoment am Beginn und am Ende des Vorspannens zur Prüfung herangezogen werden, mit den oben erwähnten Nachteilen. Weiters ist bei einer Momentanmessung des Rollmomentes der Wärmeausdehnungskoeffizient der Teile gänzlich außer Acht gelassen.

Die US 2002/124407 A1 beschreibt die Einstellung der Vorspannung eines Lagers durch Anziehen einer Mutter mit einem bestimmten Anzugsmoment bei gleichzeitiger Messung des Rollmomentes. Dabei wird die Welle von einem ersten Motor in Drehung versetzt und die Mutter zum Anziehen von einem zweiten Motor verdreht, dessen Gehäuse gemeinsam mit der Welle rotiert. Rollmoment und Anzugsmoment werden nicht direkt, sondern an den jeweiligen Motoren gemessen. Die beiden getrennten Antriebe sind aufwändig und zwingen zur Anordnung der Sensoren an den Motoren. So kommt eine Reihe weiterer toleranzbehafteter und reibungsbehafteter Einflüsse zur Wirkung und die Messung wird so ungenau, dass eine genaue Einstellung einer Vorspannung nicht möglich scheint.

Aus der US 2005/0005451 A1 ist es bekannt, zur Einstellung der Vorspannung eines Kegelrollenlagers einen Distanzring mit einer bestimmten Kraft in Längsrichtung zusammenzudrücken. Die Festigkeit des Distanzringes bestimmt somit die auf das Lager aufgebrachte Vorspannung. Auf Grund der Toleranzen des Distanzringes streut die so eingestellte Vorspannung stark.

Schließlich ist in der US 5,125,156 die Einstellung der Vorspannung eines Lagerpaares durch Anziehen einer Mutter beschrieben. Es sind wieder zwei getrennte Antriebe vorgesehen, einer für die Drehung der Welle und einer für das Anziehen der Mutter. Das Rollmoment wird direkt am Tragteil gemessen, jedoch nur, bis es anzusteigen beginnt. Die eigentliche Einstellung der Vorspannung erfolgt dann durch weiteres Verdrehen der Mutter um einen bestimmten Winkel. Dadurch kommen aber wieder die toleranzbehafteten und reibungsbehafteten Einflüsse zur Wirkung, sodass die Vorspannung nicht mit der erforderlichen Genauigkeit eingestellt werden kann.

### Problem/Lösung

Es ist somit die der Erfindung zugrunde liegende Aufgabe, das gattungsgemäße Verfahren so zu verbessern, dass die genaue Einstellung der Vorspannung auf das optimale Rollmoment auf Anhieb gelingt. Erfindungsgemäß besteht das Verfahren in den Schritten a) bis d) des 1. Anspruchs. Wesentlich ist, dass die Messung des Rollmomentes in Echtzeit während des Anziehens der Mutter erfolgt. So kann das Anziehen der Mutter genau bei Erreichen des Optimalen Rollmomentes als Zielwert abgebrochen werden und es sind alle oben aufgezählten Einflüsse ausgeblendet.

Bei der experimentellen Ermittlung des Zielwertes der Rollmomentdifferenz wird entweder der Zielwert der Rollmomentdifferenz bei Raumtemperatur ermittelt und die Verfahrensschritte nach Anspruch 1 werden bei Raumstemperatur ausgeführt. Oder es wird der Zielwert der Rollmomentdifferenz bei Betriebstemperatur ermittelt und die Verfahrensschritte nach Anspruch 1 werden bei Betriebstemperatur ausgeführt. Alternativ kann der Zielwert der Rollmomentdifferenz bei Betriebtemperatur unter Berücksichtigung der Wärmedehnungen ermittelt, mit Hilfe der ebenfalls ermittelten Charakteristik des Rollmomentes über dem Anzugsmoment in eine Rollmomentdifferenz bei Raumtemperatur umgerechnet und die Verfahrensschritte nach Anspruch 1 bei Raumtemperatur ausgeführt werden. Die Ermittlung des Zielwertes und die Ausführung des Verfahrens bei Betriebstemperatur ist am genauesten, erfordert aber eine Wärmekammer. Alle drei Wege können vorteilhaft sein, die Auswahl des besten Weges hängt unter anderem, aber vor allem von der Werkstofkonstellation ab.

Wenn zwischen den Innenringen der Lager ein verformbarer Distanzring mit Übermaß vorgesehen ist, ist es vorzuziehen, die Mutter auf der Welle zu verschrauben, bis sich zunächst nur der Distanzring zu verformen und damit des Anzugsmoment anzusteigen beginnt. Damit ist der Beginn des Aufbringens der Vorspannung genauer festgelegt und das anfängliche Anzugsmoment erhöht. Damit wird auch sichergestellt, dass sich die Mutter im Betrieb nicht löst.

Eine Verfeinerung des Verfahrens besteht darin, die relative Drehgeschwindigkeit zwischen Tragteil und Welle während des gesamten Anzugsverlaufes konstant zu halten. Das erhöht die Genauigkeit der Rollmomentmessung. Weiters ist es vorteilhaft, während des vorspannenden Anziehens der Mutter das auf sie ausgeübte Drehmoment kontinuierlich zu steigern. Das erfordert keinen weiteren Aufwand, weil die Momente in Echtzeit gemessen werden.

Eine weitere Verfeinerung besteht darin, auch den Drehwinkel in Echtzeit zu messen und aufzuzeichnen und den Distanzring so auszulegen, dass ein bestimmter Drehwinkel erst ab einem vorgegebenen Schwellenwert des Anzugsmomentes überschritten wird. Damit kann eine Mindest-Vorspannkraft der Baugruppe sichergestellt werden. Dieser Schwellenwert definiert bei bekannten Eigenschaften des Distanzringes den Zeitpunkt, in dem das Anzugsmoment anzusteigen beginnt. Der Drehwinkel braucht erst gemessen zu werden, sobald der vorgegebene Schwellenwert des Anzugsmomentes überschritten wird.

Weiters wird im Rahmen der Erfindung eine Vorrichtung vorgeschlagen, die eine besonders genaue und arbeitsökonomische Ausübung des erfindungsgemäßen Verfahrens erlaubt. Dabei war eine mentale Barriere zu durchbrechen. Es erscheint zunächst unmöglich, gleichzeitig mit dem Aufschrauben der Mutter auf die Nabe die Nabe ihrerseits auch zu drehen - zur Messung des Rollmomentes. Die erfindungsgemäße Vorrichtung überspringt diese Barriere.

Erfindungsgemäß zeichnet sich die Vorrichtung durch die Merkmale a) bis c) des 10. Anspruches aus. Das Anziehen der Mutter erfolgt durch Drehen der Welle und nicht der Mutter. In der mit dem Gestell der Vorrichtung drehfest verbundenen Halterung der Mutter, die den Schlüssel darstellt, ist der Drehmomentsensor untergebracht. Daher ist keine Signalübertragung von einem drehenden Teil nötig. Die Welle wird mit dem Anzugsmoment der Mutter in Drehung versetzt, wobei der Antrieb im Gestell angeordnet ist. Diese Drehung der Welle dient gleichzeitig der Messung des Rollmomentes. Das Rollmoment wird über einen weiteren am Tragteil angreifenden Sensor gemessen. Der Sensor ist vorzugsweise ein einerseits über einen Hebelarm beaufschlagter Kraftsensor, andererseits ist er mit dem Gestell kraftschlüssig verbunden. Durch die Bewegungsumkehr (die Welle wird gedreht, nicht die Mutter) und die Doppelfunktion der drehenden Welle (Vorspannung und Messung des Rollmomentes) ist die Messung des Rollmomentes in Echtzeit während des Vorspannens möglich und trotzdem ist die Vorrichtung relativ einfach.

Vorzugsweise besteht das Gestell der Vorrichtung aus einem Tisch und einer von diesem aufragenden Säule, wobei die Antriebsvorrichtung im Tisch untergebracht ist und die Welle mittels eines Futters in vertikaler Lage aufnimmt. Dadurch kann ein auf die Mutter passender formschlüssiger Kopf, gewissermaßen als Schlüssel, von oben auf die Welle aufgesetzt werden. Der Tragteil ist an einer von der Drehachse der Welle entfernten Stelle über einen Kraftsensor, der wegen des Hebelarmes als Drehmomentsensor wirkt, mit der Säule verbunden.

Vorzugsweise sind die Verbindungen des Kraftsensors und des Kopfes mit der Säule höhenverstellbar. Das erlaubt nebstbei die Verwendung der Vorrichtung für verschiedene Welle - Nabe - Kombinationen.

### Figuren

Fig. 1: Längsschnitt durch ein Beispiel einer Welle - Nabe - Kombination, die nach dem erfindungsgemäßen Verfahren mittels einer erfindungsgemässen Vorrichtung zusammengebauten wurde,
Fig. 2: Vertikaler Längschnitt derselben in der erfindungsgemäßen Vorrichtung,
Fig. 3: Draufsicht nach III in Fig. 2, ohne Kopf,
Fig. 4: Axonometrisches Bild der Vorrichtung.

### Beschreibung

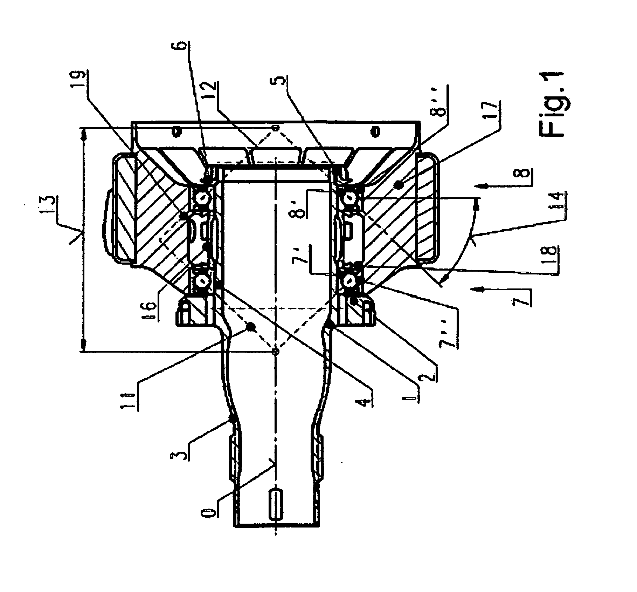

In **Fig. 1** ist die als Hohlwelle ausgebildete Welle 1 die Nabe einer Radlagerung. Ihre Achse ist mit O bezeichnet. Sie hat ungefähr in Längsmitte einen Bund 2, an den in Fig. 1 links ein Radaufnahmeteil 3 und rechts ein Lageraufnahmeteil 4 anschließt. In einem Fahrzeug verbaut würde ein Rad links an den Bund 2 angelegt und an der Welle 1 mit einer (nicht dargestellten) Zentralmutter befestigt sein. Der Lageraufnahmeteil 4 der Welle 1 ist im Wesentlichen zylindrisch und bildet den Sitz für die (Rad-) Lager 7,8. Er endet mit einem Gewinde 5 für eine Mutter 6 Zur Verspannung der Lager 7,8 gegeneinander

Die Lager 7,8 haben voneinander einen erheblichen axialen Abstand und sind hier Schrägkugellager, könnten aber auch Kegelrollenlager sein. Deren Innenringe sind mit 7', 8' und deren Außenringe mit 7", 8" bezeichnet. Verbindung der Berührungspunkte der Kugeln mit den Innen- beziehungsweise Außenringen ergibt die Druckwinkellinien 11,12, die mit einer achsnormalen Ebene einen Winkel 14, den Druckwinkel einschließen. Dieser wird als positiv bezeichnet, weil die Druckwinkellinien 11,12 die Achse O außerhalb der beiden Lager 7,8 schneiden. Der Abstand 13 dieser Schnittpunkte voneinander wird als Abstützbasis und die Anordnung der Lager mit positivem Druckwinkel als O - Anordnung bezeichnet.

Die Innenringe 7', 8' der Lager sitzen auf dem zylindrischen Teil 4 der Welle 1. Der Innenring 7' stützt sich in axialer Richtung an dem Bund 2 der Welle 1 ab, der Innenring 8' hier über einen Distanzring 16 am Innenring 7'. Der Distanzring 16 besteht aus einem verformbaren Werkstoff und ist so dimensioniert und geformt, dass er ein bestimmtes Übermaß über den Abstand der Schultern 18,19 des Tragteiles 17 und eine bestimmte axiale Steifigkeit hat. Somit gibt er (16) bei einer definierten Axialkraft nach. Damit ist die Ausgangsposition, auch für die Bestimmung des Ausgangswertes des Rollmomentes, genau festgelegt. Auf den Innenring 8' wirkt axial die Mutter 6. Die Außenringe 7", 8" der Lager sitzen im Radträger 17 und liegen in axialer Richtung an Schultern 18,19 an.

Um die hohen Lagerkräfte spielfrei und bei maximaler Lebensdauer aufnehmen zu können, sind die beiden Lager 7,8 in axialer Richtung gegeneinander mit einer bestimmten Kraft vorgespannt. Die Vorspannung wird durch Anziehen der Mutter 6 eingestellt. Das Einstellen dieser Vorspannung erfolgt in einer Vorrichtung, die im Folgenden beschrieben wird.

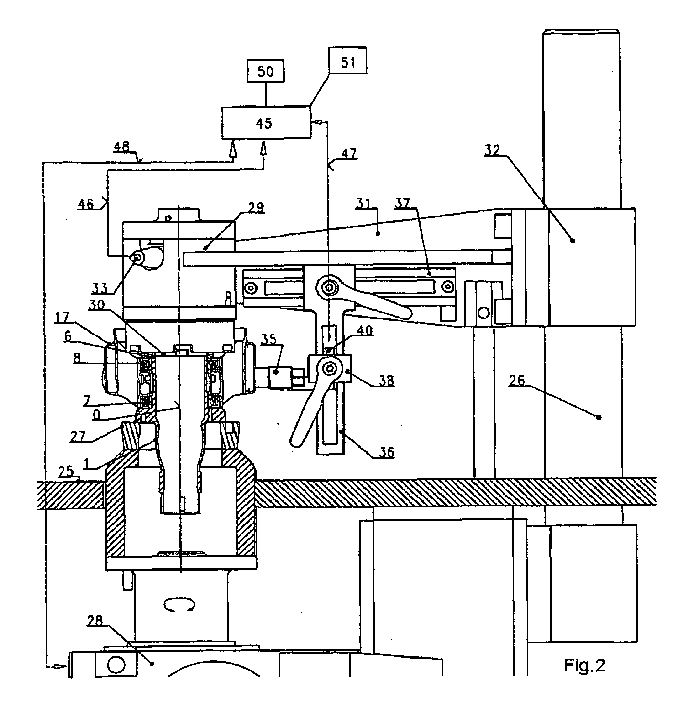

In **Fig. 2** sind vom Gestell der Vorrichtung schematisch nur ein Tisch 25 und eine Säule 26 zu sehen. Es könnten aber auch mehrere Säulen sein. In dem Tisch sind Spannbacken 27 für die drehfeste Aufnahme der Welle und ist eine Antriebsvorrichtung 28 für diese, ein regelbarer Getriebemotor, angeordnet. Die Welle 1 ist so in vertikaler Lage mit dem Gewinde für die Mutter 6 oben eingespannt und um eine vertikale Achse O drehbar. Von dem Tisch 25 ragt vertikal und seitlich zur Welle 1 versetzt eine Säule 26 auf, auf der höhenverstellbar eine Konsole 31 geführt ist. Die Konsole 31 ist mittels der Klemmmuffe 32 auf der Säule 26 festlegbar und hat über der Mutter 6 einen Kopf 29 mit auf die Mutter 6 passenden Klauen 30. Damit wird die Mutter drehfest gehalten. Der nicht rotierende Kopf 29 enthält weiters einen Momentensensor 33.

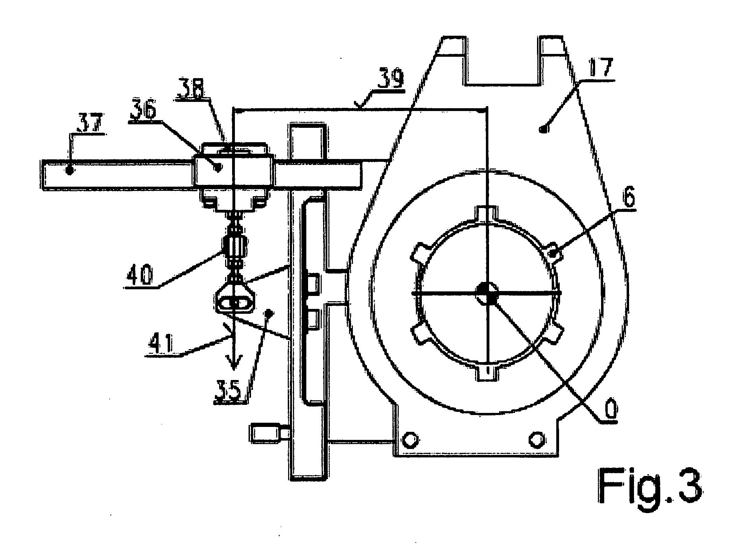

In **Fig. 2** und **Fig. 3** ist der unter der Konsole 31 angeordnete Tragteil 17 (der Radträger) mit den Lagern 7,8 zu sehen. An der Konsole 31 ist eine Horizontalführung 37 befestigt oder ausgebildet. An ihr (37) ist eine abwärts ragende vertikale Führungsschiene 36 für einen Schuh 38 angebracht. Mit dem Tragteil 17 ist ein zweites Verbindungsstück 35 fest verbunden. Zwischen dem Verbindungsstück 35 und dem Schuh 38 ist ein Kraftsensor 40 (siehe Fig. 3) vorgesehen und so ausgerichtet, dass die Kraftrichtung 41 mit dem Hebelarm 39 einen rechten Winkel einschließt. Die Horizontalführung 37 und die vertikale Führungsschiene 36 ermöglichen die genaue Positionierung des Kraftsensors 40 entsprechend der Kraftrichtung 41. Die Horizontalführung könnte auch direkt an der Säule 26 geführt sein, dann würde sich die Vertikalführung 36 erübrigen. Aus der mit dem Kraftsensor 40 gemessenen Kraft und dem Hebelarm 39 wird ein Drehmoment, das Rollmoment M_{Roll}, ermittelt.

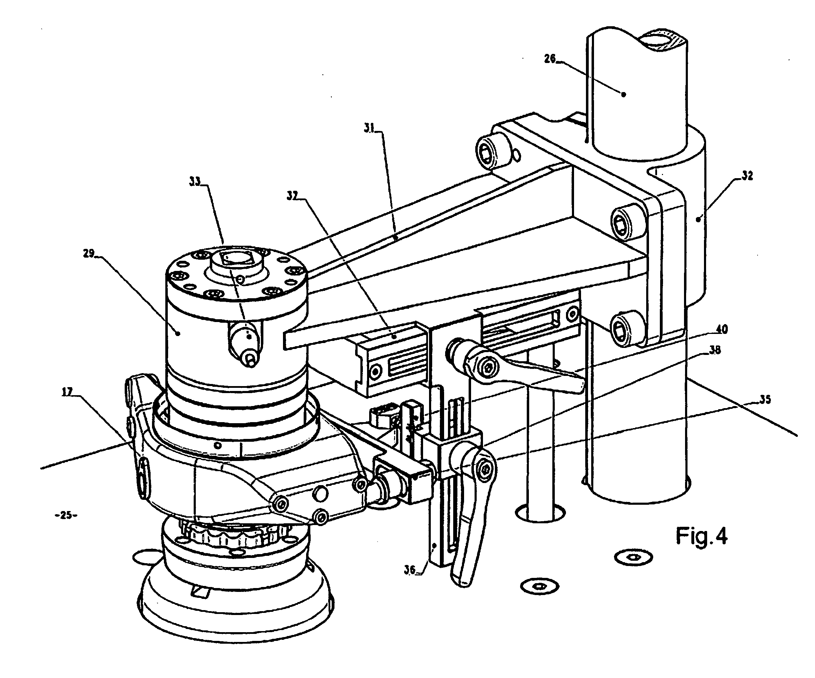

Gesteuert wird die Vorrichtung und der Ablauf der Montage von einer Steuereinheit 45 anhand eines Programms. Der Steuereinheit 45 stehen über Leitungen 46,47 die Signale vom Momentensensor 33 und von der Kraftmessdose 40 zur Verfügung. Die Steuerung der Antriebsvorrichtung 28 hinsichtlich Drehzahl, Drehmoment und gegebenenfalls Verdrehwinkel (zur Kontrolle der axialen Vorspannung) erfolgt über die Verbindung 48, sodass auch diese Werte der Steuereinheit bekannt sind. Schließlich steht die Steuereinheit 45 noch mit einer Ausgabe/Eingabe - Einheit 50 und mit einem Bildschirm 51 in Verbindung. Damit kann das Verfahren genau überwacht und auch eine umfassende Dokumentation erstellt werden. Die **Fig. 4** ist schließlich noch eine Gesamtansicht der Vorrichtung.

Im Folgenden wird die Vorgangsweise der Montage anhand der **Fig. 2** beschrieben. Die Welle 1 mit den Lagern 7,8, dem Tragteil 17 und gegebenenfalls schon der lose oben aufgesetzten Mutter 6 wird in den Spannbacken 27 eingespannt. Dann wird der Kopf 29 mit seinen in die Mutter 6 greifenden Klauen 30 aufgesetzt und die Verbindung zwischen dem Tragteil 17 und der Säule 26 über den Kraftsensor 40 hergestellt. Wenn das geschehen ist, wird der Antrieb 28 in Gang gesetzt, wodurch zunächst die Mutter 6 auf die Welle 1 aufgeschraubt wird, bis sie den Innenring 8' des Lagers 8 berührt. In diesem Moment wird auch das Rollmoment M_{Roll}⁰ als Anfangswert aus dem Signal von der Kraftmessdose 40 ermittelt und gespeichert. Im abgebildeten Ausführungsbeispiel beginnt sich ab dem Kontakt zwischen der Mutter 6 und dem Lagerinnenring 8'das Anzugsmoment aufzubauen und der Distanzring 17 zu verformen. Das wird vom Momentensensor 33 durch Ansteigen des gemessenen Anzugsmomentes an das Steuergerät 45 gemeldet. Jetzt erst beginnt das eigentliche Aufbringen der Vorspannung. Spätestens von diesem Moment an wird das Rollmoment M_{Roll} in Echtzeit gemessen, die Differenz aus diesem momentanen Rollmoment und dem Anfangswert - die Rollmomentdifferenz ΔM_{Roll} - gebildet und aufgezeichnet. Während dessen wird die Welle immer - vorzugsweise mit konstanter Drehzahl - gedreht, wobei die Mutter 6 eine ansteigende Vorspannung auf die beiden Lager 7,8 aufbringt. Wenn die Rollmomentdifferenz ΔM_{Roll}einen zuvor experimentell und/oder rechnerisch ermittelten und gegebenenfalls auf Betriebtemperatur korrigierten Zielwert ΔM*_{Roll} erreicht hat, wird der Antrieb 28 stillgesetzt und das fertig montierte und eingestellte Werkstück kann der Vorrichtung entnommen werden.

So ist die genaue Vorspannung in einem Arbeitsgang in kurzer Zeit eingestellt und obendrein der Vorgang mit allen Daten protokolliert.

## Patentansprüche

1. Verfahren zur Montage gegeneinander vorgespannter Wälzlager für eine Welle (1) in einer Anordnung mit positivem Druckwinkel (14), deren Außenringe (7", 8") in einem Tragteil (17) und deren Innenringe (7', 8') auf einer Welle (1) sitzen, wobei der Innenring (7') des ersten Wälzlagers (7) an einem Bund (2) der Welle abgestützt ist und am Innenring (8') des zweiten Wälzlagers (8) eine auf die Welle aufschraubbare Mutter (6) angreift, wobei zum die Lager (7,8) vorspannenden Anziehen der Mutter (6) Tragteil (17) und Welle (1) während der Schritte a) bis d) relativ zueinander verdreht werden und das Rollmoment (M_{Roll}) laufend gemessen wird, **gekennzeichnet durch** folgernde Schritte:
a) Die Mutter (6) wird auf der Welle (1) angesetzt und auf ihr nur **durch** Rotation der Welle verschraubt, bis zu dem Zeitpunkt, zu dem das Anzugsmoment an der Mutter anzusteigen beginnt, und der Wert des Rollmomentes zu diesem Zeitpunkt (M_{Roll}⁰) wird gemessen und gespeichert,
b) Die Mutter (6) wird nur **durch** Rotation der Welle weiter angezogen und das Rollmoment (M_{Roll}) wird laufend in Echtzeit gemessen,
c) Das gemäß b) gemessene Rollmoment (M_{Roll}) wird mit dem am Ende von Schritt a) gespeicherten Rollmoment (M_{Roll}⁰) verglichen und so eine Rollmomentdifferenz (ΔM_{Roll}) gebildet,
d) Wenn die Rollmomentdifferenz (ΔM_{Roll}) den Zielwert der Rollmomentdifferenz (ΔM*_{Roll}) erreicht, wird die Rotation der Welle (1) beendet, und die gewünschte Vorspannung ist eingestellt.

2. Verfahren nach Anspruch 1, wobei zwischen den Innenringen (7', 8') beider Wälzlager ein verformbarer Distanzring (16) mit Übermaß zum Abstand der Schultern (181,19) am Radträger (17) vorgesehen ist, **dadurch gekennzeichnet, dass** in Schritt a) die Mutter (6) auf der Welle (1) derart verschraubt wird, dass das Anzugsmoment anzusteigen beginnt, wenn sich der Distanzring (16) zu verformen beginnt.

3. Verfahren nach Anspruch 1, **dadurch gekennzeichnet, dass** der Zielwert der Rollmomentdifferenz (ΔM*_{Roll}) experimentell ermittelt ist.

4. Verfahren nach Anspruch 3, **dadurch gekennzeichnet, dass** der Zielwert der Rollmomentdifferenz (ΔM*_{Roll}) bei Raumtemperatur ermittelt ist und die Verfahrensschritte nach Anspruch 1 bei Raumtemperatur ausgeführt werden.

5. Verfahren nach Anspruch 3, **dadurch gekennzeichnet, dass** der Zielwert der Rollmomentdifferenz (ΔM*_{Roll}) bei Betriebstemperatur ermittelt ist und die Verfahrensschritte nach Anspruch 1 bei Betriebstemperatur ausgeführt werden.

6. Verfahren nach Anspruch 3, **dadurch gekennzeichnet, dass** der Zielwert der Rollmomentdifferenz (ΔM*_{Roll}) bei Betriebstemperatur unter Berücksichtigung der Wärmedehnungen in eine Rollmomentdifferenz bei Raumtemperatur umgerechnet und die Verfahrensschritte nach Anspruch 1 bei Raumtemperatur ausgeführt werden.

7. Verfahren nach Anspruch 1, **dadurch gekennzeichnet, dass** die relative Drehgeschwindigkeit zwischen Tragteil (17) und Welle (1) während der Schrittes b) bis d) des 1. Anspruches konstant gehalten wird.

8. Verfahren nach Anspruch 1, **dadurch gekennzeichnet, dass** während des Schrittes c) des 1. Anspruches das auf Mutter (6) ausgeübte Drehmoment (M_{Anzug}) kontinuierlich gesteigert wird.

9. Verfahren nach Anspruch 1, **dadurch gekennzeichnet, dass** auch der Drehwinkel in Echtzeit gemessen wird, sobald ein definierter Schwellenwert des Anzugsmomentes überschritten wird.

10. Vorrichtung zur Montage einer Einheit mit vorgespannten Wälzlagern (7,8), deren Außenringe (7", 8") in einem Tragteil (17) und deren Innenringe (7', 8') auf einer (1) Welle (1) sitzen, wobei der Innenring (7') des ersten Wälzlagers (7) an einem Bund (2) der Welle abgestützt ist und am Innenring (8') des zweiten Wälzlagers (8) eine auf die Welle (1) aufschraubbare Mutter (6) angreift, wobei die Welle (1) drehfest mit einer in einem Gestell (25,26) untergebrachten Antriebsvorrichtung (28) verbunden ist, **dadurch gekennzeichnet, dass**
a) Der Tragteil (17) über einen ersten Sensor (40) mit dem Gestell (25,26) kraftschlüssig verbunden ist, und
b) Die Mutter (6) über einen zweiten Sensor (33) drehfest mit dem Gestell (25, 26) verbunden ist.

11. Vorrichtung nach Anspruch 10, **dadurch gekennzeichnet, dass** das Gestell aus einem Tisch (25) und mindestens einer Säule (26) besteht, wobei
a) Die Antriebsvorrichtung (28) im Tisch (25) untergebracht ist und die Welle (1) mittels eines Futters (27) aufnimmt,
b) Der Tragteil (17) an einer von der Drehachse (O) der Welle entfernten Stelle über einen Kraftsensor (40) mit der Säule (26) verbunden ist, und
c) Ein auf die Mutter (6) von oben aufgesetzter formschlüssig passender Kopf (29), welcher den Momentensensor (33) enthält, fest mit der Säule (26) verbunden ist.

## Claims

1. Process for mounting pretensioned antifriction-bearings of a shaft (1) in a position with positive pressure angle (14), whose outer races (7", 8") are moun-ted in a carrier piece (17) and whose inner races (7', 8') are fitted to a shaft (1),
the inner race (7') of the first bearing (7) resting against a shoulder (2) of the shaft (1), and a nut (6) screwed on the shaft (1) acting on the inner race (`) of the second bearing (8), whereby for tightening (6) the nut, thereby pretensioning the bearings (7,8), carrier piece (17) and shaft (1) are rotated one with respect to the other during the steps a) through d) and the rolling resistance is measured continuously, **characterised by** the following steps:
a) The nut (6) is put on to the shaft (1) and tightened by rotating only the shaft, until the instant when the tightening torque applied to the nut starts to rise, and the value of the rolling resistance (M_{Roll}^{o}) is measured and recorded,
b) The nut (6) is further tightened by rotating only the shaft (1) and the rolling resistance (MRₒₗₗ) is measured continuously in real time,
c) The rolling resistance (M_{Roll}) measured according to step b) is compared with the rolling resistance (M_{Roll}^{o}) measured at the end of step a), and a rolling resistance difference (ΔM_{Roll}^{o}) is established,
d) When the rolling resistance difference (ΔM_{Roll}^{o}) has reached the target value of the rolling resistance difference (ΔM*_{Roll}), rotation of the shaft (1) is terminated and the desired pretension is set.

2. Process according to claim 1, whereby a deformable distance ring (16) oversized with respect to the distance between shoulders (18,19) of the carrier piece (17) is provided, **characterised in that** in step a) the nut (6) is tightened on the shaft (1) in such a way that the tightening torque starts to rise, when the distance ring (16) starts to be deformed.

3. Process according to claim 1, **characterised in that** the target value of the rolling resistance difference (ΔM*_{Roll}) is determined by experiment.

4. Process according to claim 3, **characterised in that** the target value of the rolling resistance difference (ΔM*_{Roll}) is established at room temperature and that the steps of claim 1 are executed at room temperature.

5. Process according to claim 3, **characterised in that** the target value of the rolling resistance difference (ΔM*_{Roll}) is determined at operating temperature and that the steps of claim 1 are executed at operating temperature.

6. Process according to claim 3, **characterised in that** the target value of the rolling resistance difference (ΔM*_{Roll}) determined at operating temperature is converted into a rolling resistance difference at room temperature and that the steps of claim 1 are executed at room temperature.

7. Process according to claim 1, **characterised in that** the relative rotational speed between carrier piece (17) and shaft (1) is kept constant during the steps b) to d) of claim 1.

8. Process according to claim 1, **characterised in that** during step c) of claim 1the torque (M_{Anzug}) acting on the nut (6) is continuously increased.

9. Process according to claim 1, **characterised in that** also the angle of rotation is measured in real time, as soon as a defined threshold value of the tightening torque is exceeded.

10. Apparatus for assembling a unit with pretensioned antifriction-bearings 7,8), whose outer races (7", 8") are placed in a carrier piece (17) and whose inner races (7', 8') are fitted to a shaft (1), the inner race (7') of the first bearing (7) pressed against a collar (2) of the shaft (1), and a nut (6) screwed on the shaft (1) acting on the inner race (8 `) of the second bearing (8), whereby the shaft (1) is coupled to a drive (28) which is located in the frame (25,26), **characterised in that**
a) the carrier piece (17) is coupled to the frame (25,26) via a first sensor (40),
b) and the nut (6) is coupled to the frame (25,26) via a second sensor (33).

11. Apparatus according to claim 10, **characterised in that** the frame consists of a table (25) and at least one column (26), where
a) The drive (28) is located in the table (25) and drives the shaft via a chuck (27),
b) The carrier piece (17) is linked from a point remote from the rotating axis (O) to the column (26) via a force sensor (40), and
c) A head (29) set from above onto the nut (6) and positively fitting on the nut (6) is coupled to the column (26), the head (29) comprising a torque sensor (33).

## Revendications

1. Procédé de montage de paliers à roulement précontraints d'un arbre (1) dans une position avec angle de pression positif (14), les bagues extérieures (7", 8") des roulements étant disposées dans un support (17) et les bagues intérieures (7', 8') étant montées sur un arbre (1), la bague intérieure (7') du premier roulement (7) s'appuyant contre un collet (2) de l'arbre (1) et la bague intérieure (8') du deuxième roulement (8) étant attaquée par un écrou (6) vissé sur l'arbre (1), procédé dans lequel dans le but de précontraindre les roulements en serrant l'écrou, le support (17) et l'arbre (1) subissent une rotation relative l'un par rapport à l'autre et le couple de roulis (M_{Roll}) est mesuré en continu pendant les pas a) à d), **caractérisé par** les pas suivants :
a) L'écrou (6) est mis sur l'arbre (1) et vissé sur l'arbre uniquement par rotation de l'arbre (1) jusqu'au moment, auquel le couple de serrage de l'écrou commence à monter, et le couple de roulis (M_{Roll}⁰) à ce moment est mesuré et mémorisé,
b) Le serrage de l'écrou (6) par rotation de l'arbre (1) est continué et le couple de roulis (M_{Roll}) est mesuré en temps réel,
c) Le couple de roulis (M_{Roll}) mesuré selon pas a) est comparé avec le couple de roulis (M_{Roll}⁰) mémorisé à la fin du pas a) pour établir une différence de couple de roulis (ΔM_{Roll}),
d) Quand la différence de couple de roulis (ΔM_{Roll}) a achévée la valeur de cible (ΔM*_{Roll}), la rotation de l'arbre (1) est terminée et la précontrainte de consigne est achevée.

2. Procédé selon la revendication 1, une bague intercalaire (16) déformable avec surmesure par rapport à la distance entre les épaules (18,19) du support (17) est disposée entre les bagues intérieures (7', 8'), **caractérisé en ce que** dans pas a) l'écrou est vissé sur l'arbre (1) de façon à ce que le couple de serrage commence à monter lorsque la bague commence à être déformée.

3. Procédé selon la revendication 1, **caractérisé en ce que** la valeur cible de la différence de couple de roulis (ΔM*_{Roll}) est *établie* par expériment.

4. Procédé selon la revendication 3, **caractérisé en ce que** la valeur cible de la différence de couple de roulis (ΔM*_{Roll}) est *établie* à température ambiante et les pass selon la revendication 1 sont executées à température ambiante.

5. Procédé selon la revendication 3, **caractérisé en ce que** la valeur cible de la différence de couple de roulis (ΔM*_{Roll}) est déterminée à température de fonctionnement et les pas selon la revendication 1 sont executés à température de fonctionnement.

6. Procédé selon la revendication 3, **caractérisé en ce que** la valeur cible de la différence de couple de roulis (ΔM*_{Roll}) déterminée à température de fonctionnement est convertie en une différence de couple de roulis à température ambiante et les pas selon la revendication 1 sont executés à température de fonctionnement.

7. Procédé selon la revendication 1, **caractérisé en ce que** la vitesse rotative relative entre le support (17) et l'arbre (1) est maintenue constante pendant les pas b) jusqu'à d) de la revendication 1.

8. Procédé selon la revendication 1, **caractérisé en ce que** pendant le pas c) de la revendication 1 le couple (M_{Anzug}) exercé sur l'écrou (6) subit une augmentation continue.

9. Procédé selon la revendication 1, **caractérisé en ce que** aussi l'angle de rotation est mesuré en temps réel, aussitôt que le couple de serrage dépasse une valeur de seuil définie.

10. Appareil pour l'assemblage d'un un ensemble avec des paliers à roulement (7,8) précontraints dont les bagues extérieures (7", 8") sont disposées dans un support (17) et dont les bagues intérieures (7', 8') sont montées sur un arbre (1), la bague intérieure (7') du premier roulement (7) s'appuyant contre un collet (2) de l'arbre (1) et la bague intérieure (8') du deuxième roulement (8) est attaquée par un écrou (6) vissé sur l'arbre (1), l'arbre (1) étant accouplé en rotation à un dispositif d'entrainement (28) logé dans un chassis (25,26), **caractérisé en ce que**
a) Le support (17) est relié à transmission de force avec le chassis (25,26) par l'intermédiaire d'un premier capteur (40), et
b) L'écrou (6) est relié en rotation avec le chassis (25,26) par l'intermédiaire d'un second capteur (33).

11. Appareil selon la revendication 10, **caractérisé en ce que** le chassis comprend une table (25) et au moins une colonne (26), et
a) Le dispositif d'entrainement (28) est logé dans la table (25) et accouplé à l'arbre (1) par moyen d'un mandrin (27),
b) Le support (17) est, a partir d'un point distant de l'axe de rotation (O), relié à la colonne (26) par l'intermédiaire d'un capteur de force (40),
c) Une tète mis d'en haut sur l'écrou (6) en engagement positif, comportant le capteur (33) est relié à la colonne.
